# EUROPÄISCHE PATENTSCHRIFT

(11) **EP 3 182 540 B1**
(45) Veröffentlichungstag und Bekanntmachung des Hinweises auf die Patenterteilung: **07.06.2023**
(21) Anmeldenummer: 16002118.4
(22) Anmeldetag: 26.09.2016
(51) Int. Cl.: H02G 3/12, H02G 3/14

(54) **ABDECKUNG**
COVERING
COUVERCLE

(30) Priorität: 16.12.2015 DE 202015106861 U
(43) Veröffentlichungstag der Anmeldung: 21.06.2017
(73) Patentinhaber: Von Heesen, Mario, 63303 Dreieich (DE)
(72) Erfinder: Von Heesen, Mario, 63303 Dreieich (DE)
(74) Vertreter: Verscht, Thomas Kurt Albert

(56) Entgegenhaltungen:
- CN-U- 202 685 748
- CN-Y- 201 359 939
- DE-A1- 4 423 075
- DE-U1- 9 307 215
- DE-U1- 29 516 448
- DE-U1-202007 002 545
- JP-U- 3 138 095
- US-A1- 2006 283 858

## Beschreibung

Die Erfindung bezieht sich auf eine Abdeckung für elektrische Vorrichtungen wie Schalter und Steckdosen, insbesondere Wandschalter und Wandsteckdosen, mit einem Randbereich und einem Mittelbereich.

Die konventionelle Lösung, eine Wandinstallation wie einen Schalter oder eine Steckdose oder jeweils mehrere dieser Installationen vor Verunreinigung oder Flüssigkeitseintritt bei Maler, Verputz- und/oder Tapezierarbeiten oder den die genannten Arbeiten ausführenden Handwerker vor unbeabsichtigtem Eingriff in eventuell stromführende Installationen zu schützen, sieht ein erfahrungsgemäß umständliches Abkleben dieser Vorrichtungen mit Klebeband, vorwiegend Kreppband, oder anderen Hilfsmitteln vor. Der Nachteil liegt besonders darin, dass zum einen der Aufwand des Abklebens, also die Vorbereitungsarbeiten zur eigentlich geplanten Arbeit, viel Zeit in Anspruch nimmt und nicht immer zur vollständigen Abdeckung der Installationen gelingt, so dass beispielsweise Farbe etc. auf die Installationen gelangt oder der Zugriff auf Teilbereiche möglich bleibt.

Darüber hinaus sind die herkömmlichen Methoden nicht feuchtigkeitsabweisend oder wasserdicht und dichten die elektrischen Installationen nicht gegen eindringende Feuchtigkeit, beispielsweise Wasser und/oder Farbe, ab.

Es existieren bereits einige Ansätze, diese bestehenden Probleme zu lösen:
Die DE 202014002621 offenbart eine Schutzabdeckvorrichtung für Installationsgeräte wie Schalter und Steckdosen zum Schutz vor eindringender Feuchtigkeit, Farbe und/oder Verschmutzungen, bestehend aus einem rechteckförmigen Abdeckteil und Halteelementen, wobei das Abdeckteil so ausgestaltet ist, dass es nach dem Einstecken in einen Unterputzeinsatz des Installationsgerätes mittels vorgesehener Halteelemente den Unterputzeinsatz und dessen Tragrahmen abdeckt.

In der DE 000029804768 U1 ist eine Schutzabdeckung aufgezeigt zur Abdeckung von Schutzleiterkontakten und sonstigen Kontakten von unter Putz eingebauten Schutzkontaktsteckdosen, die nach deren Einbau für Maler-, Tapezier- oder Renovierungsarbeiten einen Färb- und Berührungsschutz darstellt. Die Schutzabdeckung ist eine geschlossene, ohne Durchbrüche oder Öffnungen formschlüssige Bauform.

Zudem ist im Katalog Merten 2016 der Firma Schneider Electric "Lösungen für intelligente Gebäude" auf der Seite 317 unter der Artikelnummer MEG3900-000 eine Schmutzabdeckung für Schalter und Steckdosen zum Schutz der Schalter und Steckdosen vor Beschädigung durch Maler- und Lackierarbeiten gezeigt.

Allen bisherigen Lösungen ist allerdings gemeinsam, dass sie jeweils nur für eine bestimmte Ausführung von elektrischen Installationen, somit nicht allgemeingültig, und für eine Wiederverwendung vorgesehen sind, was nach Gebrauch eine zeitaufwendige Reinigung erfordert, und auch nur für jeweils eine einzelne Installation ausgelegt sind, was eine Mehrfachaufbringung bei einer typischen Ansammlung von Wandinstallationen notwendig macht.

Darüber hinaus gewährt keine der bisherigen Lösungen einen optionalen Zugriff auf innerhalb der Installationen installierte Schrauben oder eine eventuell für die Verwendung elektrischer Geräte benötigte Steckdose.

Ferner beschreibt DE 295 16 448 U1 ein Abdeckelement für Unterputzschalter und Steckdosen sowie Telefon- und Antennensteckdosen. Hierbei ist das Abdeckelement selbstklebend und elastisch oder als Vollplastik ausgebildet und weist einen selbstklebenden Rahmen auf, wobei die Rückseite des Rahmens aus einer Magnetfolie besteht.

DE 20 2007 002534 U1 beschreibt eine selbstklebende Schutz-Abdeckung für elektrische Wand-Installationen. Hierbei stellt die Schutzabdeckung einen Verbundblister dar, der aus einem Transportbogen, einem Trägerrahmen, einer transparenten Schutzfolie und einem Deckrahmen besteht.

DE 44 23 075 A1 beschreibt eine Schutzabdeckung für Unterputzinstallationen, wobei die Schutzabdeckung eine gummielastische Haube mit umlaufendem magnetischen Auflagerahmen aufweist.

US 2006/283858 A1 beschreibt eine Maskenvorrichtung, um eine elektrische Installationen während Arbeiten an einer Wand zu schützen. Die Maskenvorrichtung weist hierbei eine Stirnfläche mit angrenzenden Wänden und umlaufendem Rand auf, wobei der Rand mit einem Klebstoff verstehen ist. Hierbei bilden die Wände und die Stirnfläche eine innere Kammer aus, um eine abgedeckte Installation mit hervortretenden Elementen durch einen ausreichenden Abstand hierzu zu schützen.

DE 93 97 215 beschreibt einen Schutzdeckel zur Abdeckung von in Wänden eingebauten freiliegenden Bauteilen. Hierzu wird ein topfförmiger Deckabschnitt zur Überdeckung des Bauteils verwendet. Zur Befestigung des Schutzdeckels sind Montageabschnitte in Form von muldenartigen Vertiefungen vorgesehen, die jeweils zur Aufnahme von Klebemittel bestimmt sind. Auch kann ein Klebestreifen auf einen nicht vertieften Teil aufgebracht werden.

Der Erfindung liegt daher die Aufgabe zugrunde, eine allgemeingültige, universell einsetzbare Abdeckung der genannten Art anzugeben, die zu Maler-, Tapezier-und Verputzarbeiten einfach auf einen Schalter und/oder eine Steckdose oder eine Ansammlung von diesen zum Schutz vor Verunreinigung der Installationen und vor Verletzungen des Handwerkers aufgebracht und nach Beendigung der Arbeiten schnell und rückstandsfrei wieder entfernt werden kann.

Diese Aufgabe wird mit einer Abdeckung mit den Merkmalen des Patentanspruchs 1 gelöst. Ferner wird die Aufgabe mit einem Gesamtverbund gelöst, der miteinander verbundene erfindungsgemäße Abdeckungen aufweist.

Bei der erfindungsgemäßen Abdeckung ist der Randbereich klebend ausgeführt.

Vorteilhafte Ausgestaltungen der Erfindung sind Gegenstand der Unteransprüche.

Die Erfindung geht von der Überlegung aus, dass die zu schützenden Installationen in der Größe weitestgehend genormt sind und daher keine individuelle Abdeckung notwendig ist, sondern eine einheitlich, universell gestaltete und mit verschiedenen Optionen ausgestattete Schutzabdeckung alle Schutzbelange erfüllen kann und durch vorgesehene Ausnehmungen notwendige Zugriffe ermöglicht.

Damit das Abziehen der Abdeckung nach beendeten Arbeiten einfach erfolgen und beispielsweise ein unter dem Mittelbereich angeordneter Schalter trotz der aufgeklebten Abdeckung bedient werden kann, ist der Mittelbereich zweckmäßigerweise nichtklebend ausgeführt.

Um einen unter dem Mittelbereich der Abdeckung befindlichen Schalter auch während des Schutzvorgangs durch die Abdeckung einfach bedienen und die Abdeckung im Randbereich vollflächig aufbringen zu können, ist der Mittelbereich vorteilhafterweise aus flexiblem, dehnbarem Material gefertigt.

Um trotz der installierten Abdeckung erkennen zu können, welche Art der Installation, beispielsweise ein Schalter oder eine Steckdose, sich unter der Abdeckung befindet, ist diese vorteilhafterweise aus transparentem Material gefertigt.

Um beispielsweise eine unter der Abdeckung befindliche Steckdose zumindest zeitweise nutzen zu können, ohne die gesamte Abdeckung entfernen zu müssen, und dennoch einen Schutz an den besonders gefährdeten Außenseiten der Installation sicherzustellen, ist der Mittelbereich der Abdeckung zweckmäßigerweise über eine lösbare Verbindung an deren Randbereich angeordnet, wobei diese Verbindung als Perforation oder Vorstanzung oder auf eine andere geeignete Art und Weise vorgesehen ist.

Damit die Abdeckung beim Abziehen von der Trägerfolie oder einem anderen Träger, der für den Auslieferungszustand vorgesehen ist, formstabil abgelöst und ebenfalls formstabil auf die Installation aufgebracht werden kann, so dass eine vollständige Abdeckung erfolgt, sieht der Randbereich vorteilhafterweise eine Verstärkung vor.

Um die Abdeckung nach beendeten Arbeiten einfach angreifen und abziehen zu können, ist der Randbereich zweckmäßigerweise nicht durchgehend und vollständig klebend ausgeführt, sondern weist an mindestens einer seiner Außenseiten, beispielsweise an einer der Seiten oder an einer Ecke, für einen besseren manuellen Eingriff einen nichtklebenden Bereich auf, der in besonders vorteilhafter Ausführung farbig oder in einer anderen geeigneten Weise gekennzeichnet ist.

Damit eine Überprüfung und/oder Bedienbarkeit der Wandhalterungen der Installationen sowie eine eventuell notwendige Einstellung erfolgen kann, weist der Randbereich und/oder der Mittelbereich der Abdeckung geeignete Ausnehmungen für Wand- und/oder sonstige Befestigungen und/oder Einstell-vorrichtungen wie beispielsweise Schrauben auf, die im Auslieferungszustand verschlossen, in besonders vorteilhafter Ausführung der Ausnehmungen diese aber lösbar mit dem Rand- und/oder Mittelbereich verbunden sind.

Die mit der Erfindung erzielten Vorteile bestehen insbesondere darin, dass der Schutz für Installationen wie Schalter und/oder Steckdosen zeit- und nervensparend sowie kostengünstig zu installieren ist, einen zuverlässigen Schutz sicherstellt und besonders einfach vor Beginn der Arbeiten installierbar und nach Beendigung schnell und rückstandsfrei entfernbar ist.

Ein Ausführungsbeispiel der Erfindung wird anhand einer Zeichnung näher erläutert. Darin zeigen:
Fig. 1 die Abdeckung mit dem Randbereich und dem Mittelbereich in Draufsicht,
Fig. 2 die lösbare Verbindung zwischen dem Randbereich und dem Mittelbereich,
Fig. 3 den verstärkten Randbereich,
Fig. 4 manuelle Eingriffsbereiche im Seiten- oder Eckbereich,
Fig. 5 eine mögliche Ausführung zum Schutz mehrerer neben- und übereinander angeordneter Installationen und
Fig. 6 eine Ausführung zum Schutz von mehreren in Reihe angebrachter Installationen.

Gleiche Teile sind in allen Figuren mit denselben Bezugszeichen versehen.

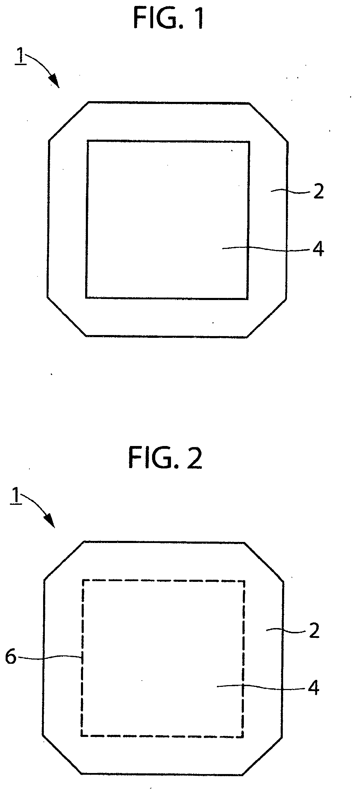

Die Fig. 1 zeigt in einer beispielhaften Ausführung, wobei die Geometrie der Abdeckung 1 auch anders als hier gezeigt ausgeführt sein kann, um die jeweilige Installation vollständig oder nahezu vollständig oder in wesentlichen Bereichen abzudecken, die Abdeckung 1 in Draufsicht mit dem Randbereich 2 und dem Mittelbereich 4. Diese beiden Bereiche 2 und 4 sind nicht zwangsläufig unterschiedlich ausgebildet, sondern können in einer einfachen, kostengünstigen Ausführung der Abdeckung 1 auch aus einem durchgehenden Material gefertigt sein, wobei auch der Mittelbereich 4 klebend ausgeführt sein kann. Für eine komfortablere Nutzung allerdings ist der Mittelbereich 4 nichtklebend ausgeführt, so dass das Entfernen der Abdeckung 1 einfach und ohne eine ungewollte Betätigung eines Schalters oder einer anderen abgeklebten Installation erfolgen kann.

In einer hier nicht dargestellten Version kann der Randbereich 2 oder der Mittelbereich 4 Ausnehmungen aufweisen, die zur Nutzung im abgeklebten Zustand von beispielsweise Verschraubungen an oder in der Installation aus dem den Randbereich 2 oder den Mittelbereich 4 bildenden Material herausgelöst werden können. Der Mittelbereich 4 ist aus einem flexiblen, dehnbaren Material gefertigt, damit vorstehende Teile der elektrischen Installationen, beispielsweise Nullleiter bei Steckdosen oder Tast- und Schalterelemente oder Dimmer das erfolgreiche Aufkleben der Abdeckung 1 nicht verhindern. Dieses dehnbare Material kann auch vor Auslieferung vorgedehnt sein, um dem Handwerker ein noch einfacheres Aufbringen auf eine in hohem Maße dreidimensionale Installation zu ermöglichen.

In einer besonders vorteilhaften Ausgestaltung der Abdeckung 1 ist der Mittelbereich 4 lösbar am Randbereich 2 angeordnet, wie die Fig. 2 zeigt. Die Verbindung 6 zwischen dem Randbereich 2 und dem Mittelbereich 4 ist durch eine Perforation, eine Vorstanzung oder eine andere geeignete Maßnahme geschwächt. Dadurch lässt sich der Mittelbereich 4 einfach aus dem ihn umgebenden Randbereich 2 herauslösen und die Installation, beispielsweise eine Steckdose oder ein Dimmer, deren Nutzung auch während der laufenden Arbeiten notwendig werden kann, ist zugänglich.

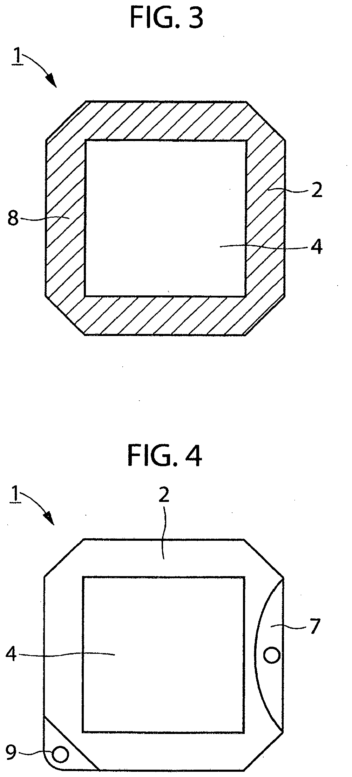

Die Fig. 3 offenbart ebenfalls eine besonders vorteilhafte Ausführung der Abdeckung 1: Der Randbereich 2 ist in seiner Gänze oder teilweise mit einer Verstärkung 8 versehen, die ein formstabiles Abziehen von der die Klebung schützenden Trägerfolie sowie ein formstabiles Aufkleben auf die zu schützende Installation ermöglicht.

Da eine der Aufgabenstellungen zur Entwicklung der erfindungsgemäßen Abdeckung 1 die einfache Bedienbarkeit durch den Anwender ist, kann ein Teilbereich des Randbereiches 2 auf einer der Längsseiten als nichtklebender Eingriff 7 oder an einer der Ecken als nichtklebender Eingriff 9 der Abdeckung 1 ausgeführt sein, wie die Fig. 4 zeigt.

Dadurch ist es trotz vollständig funktionierenden Schutzes möglich, nach Beendigung der Arbeiten die Abdeckung 1 manuell anzugreifen und von diesem nichtklebenden Bereich 7 oder 9 aus von der elektrischen Installation abzuziehen. Im Gegensatz zur herkömmlichen Abklebung mit Kreppband ist die Entfernung auch nach längeren Zeiträumen, die die Abdeckung 1 auf der zu schützenden Installation verbleibt, ohne Kleberückstände möglich.

Zur besseren Identifizierung und Anleitung des Handwerkers kann dieser Eingriff 7 oder 9 farbig gekennzeichnet oder mit einem Text oder einem Piktogramm oder auf eine andere geeignete Weise, beispielsweise durch eine Bedruckung, hervorgehoben werden. Für schwach beleuchtete Räume kann dieser nichtklebende Bereich 7 oder 9 auch durch eine dreidemensionale Kennzeichnung hervorgehoben sein.

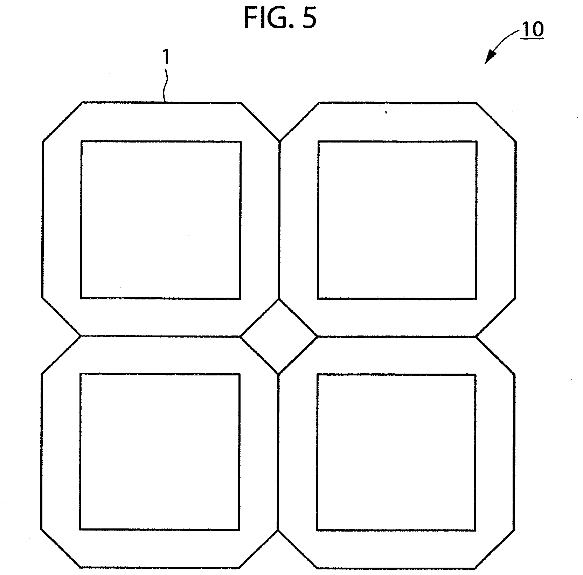

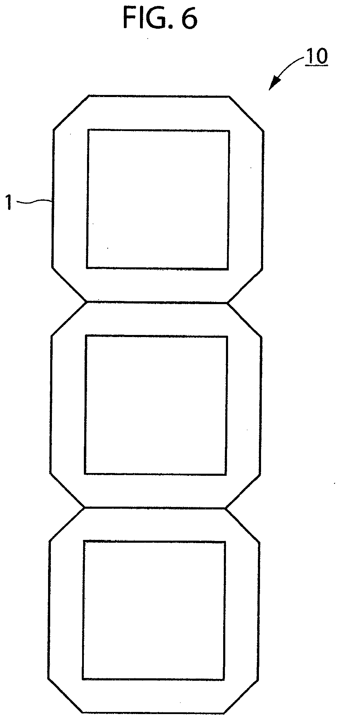

Eine weitere Erleichterung der Abdeckung von Installationen zeigen die Figuren 5 und 6:
In der Fig. 5 ist eine mögliche Auslieferungsvariante der Abdeckung 1 offenbart. Für beispielsweise im Quadrat angeordnete Installationen wird von den im Gesamtverbund 10 miteinander verbundenen Abdeckungen 1 die rückseitig angeordnete Klebefolie abgezogen und der Gesamtverbund 10 auf die Installationen aufgebracht. Für einzelne oder doppelte Installationen können einzelne Abdeckungen 1 aus dem Gesamtverbund 10 herausgelöst werden, wozu die Verbindung der einzelnen Abdeckungen 1 untereinander im Gesamtverbund 10 lösbar ausgeführt ist, beispielsweise durch eine Perforation oder eine andere geeignete Maßnahme.

Da eine Mehrfach-Installation aber üblicherweise neben- oder untereinander angeordnete Einzelinstallationen umfasst, deckt die in der Fig. 5 gezeigte Anordnung der Abdeckungen 1 in einem Gesamtverbund 10 den voraussichtlich weitestgehenden Bedarf ab. Die Anordnung der Abdeckungen 1 entspricht dabei den weitestgehend genormten Maßen und Abständen der Installationen.

Die Fig. 6 zeigt einen Gesamtverbund 10 und möglichen Auslieferungszustand der Abdeckung 1 sowie für deren Anwendung bei ausschließlich horizontal oder vertikal nebeneinander angeordneten Installationen. Die Vorgehensweise zur Verwendung dieser Abdeckungen 1 entspricht der bei der Beschreibung der Fig. 5 aufgeführten.

### Bezugszeichenliste

1 : Abdeckung
2 : Randbereich
4 : Mittelbereich
6 : Verbindung
7 : seitlicher Eingriff
8 : Verstärkung
9 : Eckeingriff
10 : Gesamtverbund

## Patentansprüche

1. Abdeckung (1) für elektrische Installationen wie Schalter und Steckdosen, insbesondere Wandschalter und Wandsteckdosen,
mit einem Randbereich (2) und einem Mittelbereich (4),
- wobei die Abdeckung (1) in einem Auslieferungszustand auf einer Trägerfolie aufgebracht ist und von dieser Trägerfolie formstabil abziehbar ist,
- wobei der Randbereich (2) der Abdeckung (1) klebend ausgeführt ist und eine Verstärkung (8) aufweist,
- wobei der Mittelbereich (4) nicht klebend ausgeführt ist und zumindest der Mittelbereich (4) der Abdeckung (1) aus flexiblem, dehnbaren Material gefertigt ist, und
- wobei zumindest der Mittelbereich (4) aus transparentem Material gefertigt ist und
- die elektrische Installation während eines Abdeckens der elektrischen Installation mit der Abdeckung (1) durch einen Anwender bedienbar ist, wobei der Mittelbereich (4) über eine lösbare Verbindung (6) am Randbereich (2) angeordnet ist,
- wobei der Randbereich (2) und/oder der Mittelbereich (4) Ausnehmungen für Wand- und sonstige Befestigungen und/oder Einstellvorrichtungen, beispielsweise Schrauben, aufweist und
- wobei die Ausnehmungen im Auslieferungszustand verschlossen und lösbar mit dem Randbereich (2) und /oder dem Mittelbereich (4) verbunden sind.

2. Abdeckung (1) nach Anspruch 1, wobei die lösbare Verbindung als Perforation oder Vorstanzung ausgeführt ist.

3. Abdeckung (1) nach einem der Ansprüche 1 oder 2,
wobei der Randbereich (2) an mindestens einer Stelle einen nichtklebenden Bereich (7, 9) aufweist.

4. Abdeckung (1) nach Anspruch 3, wobei der nichtklebende Bereich (7, 9) farbig und/oder durch einen Aufdruck und/oder eine dreidimensionale Kennzeichnung gekennzeichnet ist.

5. Abdeckung (1) nach Anspruch 3 oder Anspruch 4,
wobei der nichtklebende Bereich (7, 9) als Eingriff an einer der Seiten oder an einer Ecke der Abdeckung (1) ausgebildet ist.

6. Abdeckung (1) nach einem der Ansprüche 1 bis 5, wobei im Mittelbereich (4) die Ausnehmungen im Auslieferungszustand der Abdeckung (1) verschlossen sind.

7. Gesamtverbund (10) aufweisend miteinander verbundenen Abdeckungen (1) nach einem der Ansprüche 1 bis 7.

8. Gesamtverbund (10) nach Anspruch 7, wobei einzelne Abdeckungen (1) aus dem Gesamtverbund (10) herauslösbar sind.

## Claims

1. Cover (1) for electrical installations such as switches and sockets, in particular, wall switches and wall sockets,
with an edge area (2) and a central area (4),
- wherein the cover (1) is attached to a backing film in a delivery state and is dimensionally stable peelable from this backing film,
- wherein the edge area (2) of the cover (1) is made adhesive and comprises a reinforcement (8),
- wherein the central area (4) is made non-adhesive and at least the central area (4) of the cover (1) is manufactured of flexible, stretchable material, and
- wherein at least the central area (4) is manufactured of transparent material and
- the electrical installation during a covering of the electrical installation with the cover (1) is operable by a user, wherein the central area (4) is arranged at the edge area (2) via a detachable connection (6),
- wherein the edge area (2) and/or the central area (4) comprises recesses for wall fastenings and other fastenings and/or adjusting devices, for example screws,
and
- wherein the recesses are closed and detachably connected to the edge area (2) and/or the central area (4) in the delivery state.

2. Cover (1) according to claim 1, wherein the detachable connection is made as perforation or pre-punching.

3. Cover (1) according to any of claims 1 or 2,
wherein the edge area (2) comprises a non-adhesive area (7, 9) at at least one position.

4. Cover (1) according to claim 3, wherein the non-adhesive area (7, 9) is marked in a colored manner and/or by an imprint and/or a three-dimensional marking.

5. Cover (1) according to claim 3 or claim 4,
wherein the non-adhesive area (7, 9) is formed as a grasping means at one of the sides or at a corner of the cover (1).

6. Cover (1) according to one of claims 1 to 5, wherein, in the central area (4), the recesses are closed in the delivery state of the cover (1).

7. Collective assembly (10) comprising interconnected covers (1) according to any of the claims 1 to 7.

8. Collective assembly (10) according to claim 7, wherein individual covers (1) are detachable from the collective assembly (10).

## Revendications

1. Couvercle (1) pour des installations électriques telles que des commutateurs et des prises, en particulier des commutateurs muraux et des prises de courant murales,
avec une zone de bord (2) et une zone centrale (4),
- dans lequel le couvercle (1), dans un état de livraison, est appliqué sur un film de support et peut être détaché de ce film de support avec une stabilité de forme,
- dans lequel la zone de bord (2) du couvercle est réalisée adhésive et comporte un renforcement (8),
- dans lequel la zone centrale (4) est réalisée non adhésive et au moins la zone centrale (4) du couvercle (1) est fabriquée en matériau flexible extensible, et
- dans lequel au moins la zone centrale (4) est fabriquée en matériau transparent et
- l'installation électrique est apte à être utilisée par un utilisateur pendant un couvercle de l'installation électrique avec le couvercle (1), dans lequel la zone centrale (4) est disposée par l'intermédiaire d'une liaison amovible (6) sur la zone de bord (2),
- dans lequel la zone de bord (2) et/ou la zone centrale (4) comportent des creux pour des fixations et/ou dispositifs de réglage muraux et autres, par exemple des vis, et
- dans lequel les creux, à l'état de livraison, sont fermés et sont reliés de manière amovible à la zone de bord (2) et/ou la zone centrale (4).

2. Couvercle (1) selon la revendication 1, dans lequel la liaison amovible est réalisée comme une perforation ou un prédécoupage.

3. Couvercle (1) selon l'une des revendications 1 ou 2,
dans lequel la zone de bord (2) comporte à au moins un endroit une zone non adhésive (7, 9).

4. Couvercle (1) selon la revendication 3, dans lequel la zone non adhésive (7, 9) est colorée et/ou identifiée par une empreinte et/ou une identification tridimensionnelle.

5. Couvercle (1) selon la revendication 3 ou la revendication 4,
dans lequel la zone non adhésive (7, 9) est formée comme une partie de préhension sur l'un des côtés ou sur un coin du couvercle (1).

6. Couvercle (1) selon l'une des revendications 1 à 5, dans lequel dans la zone centrale (4), les creux sont fermés, à l'état de livraison du couvercle (1).

7. Ensemble (10) comportant des couvercles (1) selon l'une des revendications 1 reliés entre eux.

8. Ensemble (10) selon la revendication 7, dans lequel des couvercles (1) individuels peuvent être détachés de l'ensemble (10).
